(19) Europäisches Patentamt
European Patent Office
Office européen des brevets

(11) **EP 3 817 878 B1**

(12) **EUROPÄISCHE PATENTSCHRIFT**

(45) Veröffentlichungstag und Bekanntmachung des Hinweises auf die Patenterteilung:
**29.12.2021  Patentblatt 2021/52**

(21) Anmeldenummer: **20747395.0**

(22) Anmeldetag: **28.07.2020**

(51) Int Cl.:
**B23B 51/06** (2006.01)

(86) Internationale Anmeldenummer:
**PCT/EP2020/071208**

(87) Internationale Veröffentlichungsnummer:
**WO 2021/037460 (04.03.2021 Gazette 2021/09)**

(54) **EINLIPPENBOHRER MIT ZWEI LÄNGSNUTEN IN DER SPANFLÄCHE**

GUN DRILL WITH TWO LONGITUDINAL GROOVES IN THE RAKE FACE

FORET 3/4 AVEC DEUX RAINURES LONGITUDINALES DANS LA FACE DE COUPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2019  DE 102019122686**

(43) Veröffentlichungstag der Anmeldung:
**12.05.2021  Patentblatt 2021/19**

(73) Patentinhaber: **Botek Präzisionsbohrtechnik GmbH**
**72585 Riederich (DE)**

(72) Erfinder:
• **RABER, Peter**
  **66265 Heusweiler (DE)**

• **DEEG, Jürgen**
  **72555 Metzingen (DE)**
• **KAMMERER, Patrick**
  **72147 Nehren (DE)**
• **STANKE, Dennis**
  **72658 Bempflingen (DE)**

(74) Vertreter: **DREISS Patentanwälte PartG mbB**
**Friedrichstraße 6**
**70174 Stuttgart (DE)**

(56) Entgegenhaltungen:
**WO-A1-2018/219926     DE-A1-102010 051 248**
**JP-A- 2009 101 460**

## Beschreibung

## Beschreibung

Die Erfindung betrifft einen Einlippen-Tieflochbohrer. Die für die Offenbarung der Erfindung wesentlichen Begriffe werden unter anderem im Zusammenhang mit der Figurenbeschreibung erläutert. Darüber hinaus werden am Ende der Figurenbeschreibung einzelne Begriffe in der Art eines Glossars näher erläutert.

Aus dem Stand der Technik sind verschiedene Tieflochbohrer bekannt, die unterschiedliche Ansätze verfolgen, um kurze Späne zu erzeugen. Kurze Späne sind eine Voraussetzung für den problemlosen und störungsfreien Abtransport der Späne durch die Sicke des Bohrkopfs und des Bohrerschafts.

Ein Ansatz zum Erreichen dieses Ziels wird in der DE 10 2010 051 248 A1 beschrieben, die einen Einlippenbohrer nach dem Oberbegriff des Anspruchs 1 offenbart.

Sie schlägt vor, etwa in der Mitte der Spanfläche einen Spanbrecher in Form einer Längsnut einzubringen und zugleich mindestens eine weitere Längsnut auf der der Spanfläche gegenüberliegenden Seitenfläche der Sicke einzubringen. Diese Längsnuten sind relativ schmal, das heißt sie nehmen jeweils nur etwa 15% der Breite der Spanfläche bzw. der gegenüberliegenden Seite der Spannut ein.

Aus der JP-S-6234712 ist ein Tieflochbohrer bekannt, bei dem in der Spanfläche eine Erhebung ausgebildet ist. Diese Erhebung ist höher als die Spanfläche. Rechts und links dieser Erhebung können Vertiefungen oder Längsnuten ausgebildet sein. Wesentliches Merkmal ist die Erhebung auf der Spanfläche, die ein Brechen der Späne bewirken soll. Weitere Einlippenbohrer sind aus der JP 2009 101460 A und der WO 2018/219926 A1 bekannt.

Der Erfindung liegt die Aufgabe zugrunde, einen Tieflochbohrer zu schaffen, der zur Zerspanung zäher und/oder langspanender Werkstoffe geeignet ist. Darüber hinaus soll er einfach in der Herstellung und gut nachschleifbar sein sowie eine größere Standzeit als herkömmliche Bohrwerkzeuge mit Spanformern haben. Darüber hinaus ist natürlich auch der Energiebedarf beim Bohren ein Thema. Ein niedriger Bedarf an Antriebsleistung reduziert die thermische Belastung der Schneide, was den Verschleiß des Werkzeugs und die Beanspruchung des bearbeiteten Werkstücks reduziert. Dadurch werden direkte und indirekte Kosten verringert.

Diese Aufgabe wird erfindungsgemäß durch einen Einlippenbohrer nach Anspruch 1 gelöst.

Eine Längsnut ist eine in die Spanfläche eingearbeitete Vertiefung, die im Wesentlichen parallel zur Längsachse des Tieflochbohrers verläuft. Die Längsnuten müssen nicht exakt parallel zu der Längsachse des Tieflochbohrers verlaufen; Abweichungen von bis zu 2° sind möglich; die erfindungsgemäßen Vorteile werden auch dann noch in vollem Umfang realisiert.

Die parallel zueinander verlaufenden Längsnuten in der Spanfläche ragen nicht über die Spanfläche hinaus, sondern sind, wenn man die Spanfläche als "Null-Niveau" betrachtet, Vertiefungen. Ein Wulst oder eine Erhöhung über die Spanfläche hinaus ist erfindungsgemäß nicht vorgesehen. Das Einbringen der Längsnuten in einer ebenen Spanfläche nach dem Stand der Technik ist beispielsweise durch Schleifen fertigungstechnisch viel einfacher als eine Erhebung vorzusehen. Es können auch herkömmliche Einlippenbohrer mit ebener Spanfläche nachträglich durch Einschleifen der Längsnuten ertüchtigt und zu einem erfindungsgemäßen Einlippenbohrer umgearbeitet werden.

Die parallel zueinander verlaufenden Längsnuten sind relativ breit. Das heißt sie nehmen in Summe mindestens 40% von der Breite der Spanfläche ein. Es verbleiben von der ursprünglichen Spanfläche nur ein Steg, der sich zwischen den beiden Längsnuten bildet, sowie je ein Streifen zwischen der Nebenschneide und der äußeren Längsnut sowie zwischen der inneren Längsnut und der Seitenwand der Sicke. Die Spitze bzw. Oberseite des Stegs sowie die verbleibenden Streifen sind somit auf gleicher Höhe wie die ursprüngliche Spanfläche. Vorteilhafte Werte für die Breite $S_1$ des Streifens zwischen der Nebenschneide und der äußeren Längsnut finden sich im Anspruch 17.

Die vorderen Enden der Längsnuten, des Steges sowie der verbleibenden Flächen bilden zusammen mit der Freifläche die innere Schneide und die äußere Schneide des Tieflochbohrers. Die innere Schneide und die äußere Schneide sind daher nicht gerade, sondern umfassen bogenförmige und/oder polygonale Abschnitte. Aufgrund dessen entstehen zwei Späne (einer wird von der inneren Schneide erzeugt, der andere wird von der äußeren Schneide erzeugt), die unmittelbar nachdem sie von den Schneiden aus dem Material abgespant wurden, in einer Gleitbewegung in Richtung des Stegs fließen. Wenn die Späne an der Flanke des Stegs entlang in Richtung der Spitze des Stegs fließen, werden die Späne sowohl der inneren Schneide als auch der äußeren Schneide eingerollt und brechen nach kurzer Zeit. Dies bedeutet, dass sowohl die von der inneren Schneide des Tieflochbohrers als auch von der äußeren Schneide des Tieflochbohrers erzeugten Späne eingerollt und kurzbrechend sind.

Durch den Steg zwischen der äußeren Längsnut und der inneren Längsnut wird der Span in zwei Späne geteilt und die Breite der erzeugten Späne - verglichen mit einem konventionellen Tieflochbohrer mit ebener Spanfläche - in erster Näherung halbiert. Auch das führt zu kleineren kompakteren Spänen, die besser aus der Bohrung abgeführt werden können.

Es hat sich bei Bohrversuchen überraschender Weise herausgestellt, dass die beiden Längsnuten die Spanbildung positiv beeinflussen. Insbesondere beim Zerspanen zäher Werkstoffe werden die Späne schmaler und durch die Gestaltung des Querschnitts der Längsnuten auch kürzer. Dies verbessert den Spanabtransport aus der erzeugten Bohrung weiter und erhöht somit die Prozesssicherheit beziehungsweise ermöglicht eine Steigerung des Vorschubs und somit eine Reduzierung der Bearbeitungszeit sowie der Kosten. Zudem hat sich bei Versuchen herausgestellt, dass bei günstiger geometrischer Ausgestaltung der Längsnuten die Vorschubkraft bei sonst gleichen Parametern um mindestens 10% sinkt. In einzelnen Versuchen konnte eine Reduktion der Vorschubkraft von 15% erreicht werden. Diese Reduktion der Vorschubkraft führt zu einer besseren Bohrungsqualität. Außerdem werden die erforderliche Antriebsleistung und die Wärmeentwicklung im Bereich der Schneiden reduziert. Letzteres verringert den Verschleiß an der Schneide, was wiederum eine Erhöhung der Werkzeugstandzeit zur Folge hat.

Ein weiterer Vorteil der erfindungsgemäßen Gestaltung der Spanfläche ist darin zu sehen, dass die Längsnuten fertigungstechnisch gut zu beherrschen sind. In der Regel wird man eine profilierte Schleifscheibe einsetzen und die Längsnuten in einem Durchgang (durch Tiefschleifen) erzeugen. Anschließend kann der Bohrkopf mit einer Verschleißschutzschicht beschichtet werden.

Wenn nach einer gewissen Betriebsdauer die innere und die äußere Schneide des Tieflochbohrers stumpf geworden sind, kann der erfindungsgemäße Einlippenbohrer durch Nachschleifen an der Stirnseite des Bohrkopfs (in der Regel wird ein sogenannter Facettenschliff nachgeschliffen) wieder geschärft werden. Ein Entschichten beziehungsweise Entfernen der Verschleißschutzschicht und ein anschließendes Wiederbeschichten der Längsnuten bzw. der Spanfläche nach dem Schleifen ist nicht erforderlich. Dies bedeutet, dass der erfindungsgemäße Einlippenbohrer beim Kunden nachgeschliffen werden kann. Das Einsenden stumpf gewordener Tieflochbohrer zum Hersteller kann entfallen. Auch das ist ein erheblicher Vorteil hinsichtlich Kosten, Verfügbarkeit und Ressourceneffizienz.

Der Steg, der zwischen den beiden Längsnuten mit einer gewissen Zwangsläufigkeit entsteht, läuft immer auf die Spitze des Tieflochbohrers zu. Das heißt, wenn die Spitze des Tieflochbohrers in radialer Richtung nach außen oder nach innen wandert, wird der Steg zwischen den beiden Längsnuten entsprechend verschoben.

Die Längsnuten sind in der Regel symmetrisch bezüglich des einschließenden Stegs. Es ist jedoch auch möglich, dass die Längsnuten geometrisch ähnlich sind, so dass sie die gleichen geometrischen Elemente im Querschnitt aufweisen; allerdings unterscheiden sich die Abmessungen dieser geometrischen Elemente. Es ist auch möglich, dass die innere Längsnut und die äußere Längsnut ein unterschiedliches Profil aufweisen.

Die Längsnuten können in einer orthogonal zur Drehachse des Tieflochbohrers verlaufenden Schnittebene die Form einer ersten Geraden und einer tangential daran anschließenden gekrümmten Linie haben. Die erste Gerade und die Spanfläche schließen einen Winkel $\alpha$

ein und die gekrümmte Linie schneidet die Spanfläche in einem Winkel $\beta$.

In der Regel befindet sich die erste Gerade an der dem Steg gegenüberliegenden Seite der Längsnuten. Bei der inneren Längsnut bedeutet dies, dass die Gerade im Bereich der Mittelachse beginnt und dort die Spanfläche schneidet. Im Bereich der äußeren Längsnut bedeutet dies, dass die Gerade im Bereich der Nebenschneide beginnt.

Dann schließt die gekrümmte Linie im Querschnitt direkt an den Steg 19 an; d. h. die gekrümmten Linien bilden den Steg zwischen den Längsnuten.

Es hat sich als vorteilhaft erwiesen, wenn der Winkel $\alpha$ zwischen der Geraden und der Spanfläche in einem Bereich zwischen 30° und 10° liegt; bevorzugt liegt er in einem Bereich zwischen 25° und 15°. Besonders vorteilhaft ist, wenn der Winkel $\alpha$ einen Wert von 20° hat.

Bezüglich des Winkels $\beta$ haben sich Bereiche zwischen 60° und 20°, bevorzugt zwischen 50° und 35° bewährt. In vielen Anwendungsfällen ist ein Winkel $\beta$ von 45° besonders vorteilhaft.

Die Längsnuten können in einer orthogonal zur Drehachse des Tieflochbohrers verlaufenden Schnittebene die Form eines Kreissegments, eines gleichschenkligen Dreiecks oder eines ungleichschenkligen Dreiecks haben. Ausführungsbeispiele dieser Querschnittsgeometrien der Längsnuten sind in den Figuren dargestellt und werden weiter unten beschrieben.

Die Wahl der Querschnittsform hängt unter anderem von dem zu zerspanenden Werkstoff ab. Ein weiterer Faktor sind auch die zur Verfügung stehenden Schleifscheiben. Die zum Schleifen einer im Querschnitt dreieckigen Längsnut erforderliche Schleifscheibe ist leichter abzurichten, als eine Schleifscheibe mit einer gekrümmten Linie im Querschnitt. Allerdings ist es auch mit Hilfe NCgesteuerter Abrichtmaschinen und/oder speziell gestalteter Abrichtwerkzeuge möglich, ein gekrümmtes Profil an einer Schleifscheibe anzubringen.

Alle in der Beschreibung beschriebenen und den Unteransprüchen beanspruchten Geometrien der Längsnuten haben sich in praktischen Versuchen als sehr vorteilhaft erwiesen.

Bei dem erfindungsgemäßen Einlippenbohrer mündet der Steg zwischen den Längsnuten in der Spitze des Einlippenbohrers.

Dabei hat es sich als vorteilhaft erwiesen, wenn der Abstand der Spitze von der Nebenschneide größer als 0,2 × der Durchmesser des Bohrwerkzeugs ist. Der Abstand sollte kleiner als 0,36 × der Durchmesser des Bohrwerkzeugs sein. Als besonders vorteilhaft hat es sich bei Bohrversuchen erwiesen, wenn der Abstand der Spitze von der Nebenschneide gleich 0,25 × der Durchmesser des Bohrwerkzeugs ist.

Um die Nebenschneide durch die äußere Längsnut nicht zu schwächen, ist vorzugsweise weiter vorgesehen, dass zwischen einem Rand der äußeren Längsnut und der Nebenschneide ein Abstand von mindestens 0,05 mm, bevorzugt 0,1 mm und besonders bevorzugt von 0,15 mm beträgt. Dadurch wird die Herstellung vereinfacht und die Nebenschneide bleibt mechanisch belastbarer und Ausbrüche an der Nebenschneide werden wirkungsvoll verhindert.

In entsprechender Weise ist vorgesehen, dass der Steg zwischen der inneren Längsnut und der äußeren Längsnut nicht als scharfe Kante ausgebildet ist, sondern eine Breite B > 0,1 mm, bevorzugt B > 0,2 mm, sehr bevorzugt von etwa 0,4 mm aufweist.

Der Steg muss nicht scharf sein, da er nicht Teil der Hauptschneide ist, sondern die Spanfläche bildet. Vielmehr sind die Flanken des Stegs diejenigen Teile der Längsnut, die das Einrollen und schließlich das Brechen der Späne bewirken.

Die Summe einer Breite der inneren Längsnut und einer Breite der äußeren Längsnut beträgt mehr als $0,2 \times$ der Durchmesser des Tieflochbohrers. Dies bedeutet, dass die Breite der beiden Längsnuten zusammen mehr als 40% der Breite der Spanfläche ausmacht.

Die Summe einer Breite der inneren Längsnut und einer Breite der äußeren Längsnut kann auch mehr als $0,4 \times$ der Durchmesser des Tieflochbohrers betragen. Dies bedeutet, dass die Breite der beiden Längsnuten zusammen mehr als 80% der Breite der Spanfläche ausmacht.

Um den Standweg des Tieflochbohrers zu verbessern und das Ablaufen der Späne auf den Oberflächen der Längsnuten zu verbessern, ist vorzugsweise vorgesehen, mindestens die Spanfläche beziehungsweise die Längsnuten und die Wand der Sicke mit einer Verschleißschutzschicht, insbesondere einer Hartstoffbeschichtung zu versehen.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - mehrere Ausführungsbeispiele der Erfindung dargestellt sind.

Es liegt auf der Hand, dass die Erfindung bei verschiedensten Formen und Geometrien von Längsnuten angewandt werden kann. Daher beschränken die in den Figuren dargestellten Geometrien von Mulden den Schutzbereich der beanspruchten Erfindung nicht, sondern dienen vor allem der Erläuterung und Veranschaulichung.

Zeichnung

Es zeigen:

Figuren 1 und 2 einen Einlippenbohrer (Stand der Technik);

Figur 3 eine Ansicht von vorne auf den Einlippenbohrer gemäß Figur 1;

Figur 4 einen erfindungsgemäßen Einlippenbohrer in einer Draufsicht;

Figur 5 einen erfindungsgemäßen Einlippenbohrer in einer Ansicht von vorne; und

Figuren 6 bis 8 Schnitte durch verschiedene Formen von Längsnuten.

Beschreibung der Ausführungsbeispiele

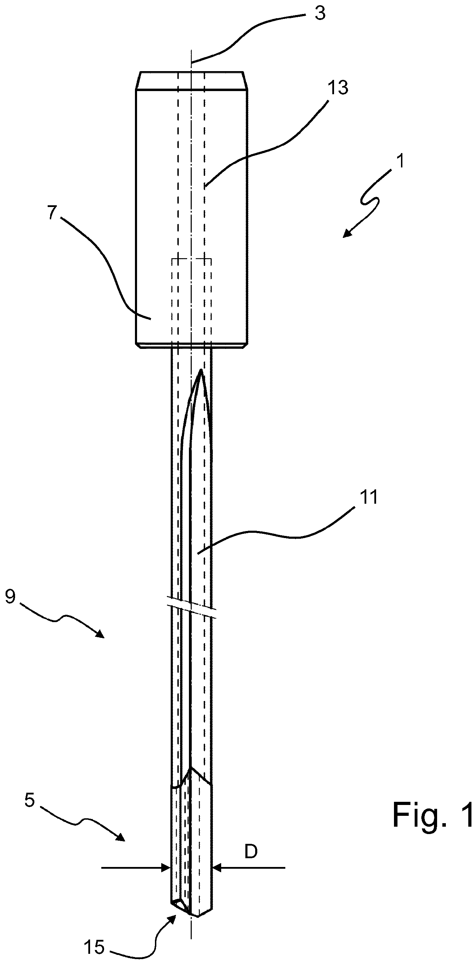

Bei allen Figuren werden für die gleichen Elemente beziehungsweise Bauteile die gleichen Bezugszeichen verwendet. In der Figur 1 ist ein Einlippenbohrer 1 dargestellt. Eine Mittelachse 3 ist gleichzeitig auch die Drehachse des Einlippenbohrers 1 beziehungsweise des Werkstücks (nicht dargestellt), wenn dieses beim Bohren in Rotation versetzt wird.

Ein Durchmesser des Einlippenbohrers 1 ist mit D bezeichnet. Der Einlippenbohrer 1 setzt sich aus drei Hauptkomponenten zusammen, nämlich einem Bohrkopf 5, einer Einspannhülse 7 und einem Schaft 9. Dieser Aufbau ist dem Fachmann bekannt und wird daher nicht im Detail erläutert.

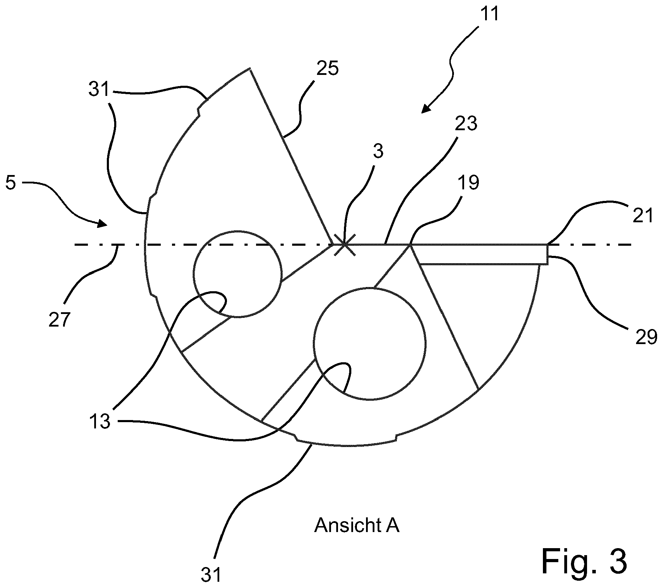

In dem Schaft 9 und dem Bohrkopf 5 ist eine Sicke 11 vorhanden. Die Sicke 11 hat einen Querschnitt annähernd in Form eines Kreissegments (siehe Figur 3) mit einem Winkel üblicherweise von etwa 90° bis 130°. Die Sicke 11 erstreckt sich von der Spitze des Bohrers bis vor die Einspannhülse 7. Wegen der Sicke 11 haben Bohrkopf 5 und Schaft 9 einen Querschnitt annähernd in der Form eines Kreissegments mit einem Winkel von üblicherweise 230° bis 270° (Ergänzungswinkel zum Winkel der Sicke 11).

Ein Kühlkanal 13 erstreckt sich über die gesamte Länge des Einlippenbohrers 1. An einem stirnseitigen Ende der Einspannhülse 7 wird Kühlmittel oder eine Mischung aus Kühlmittel und Luft unter Druck in den Kühlkanal 13 gefördert. Das Kühlmittel beziehungsweise das Gemisch aus Kühlmittel und Luft tritt im am gegenüberliegenden vorderen Ende 15, der Stirnseite des Bohrwerkzeugs, wieder aus dem Kühlkanal 13 aus. Das Kühlmittel hat mehrere Aufgaben. Es sorgt zum einen zur Kühlung und Schmierung der Schneide und der Führungsleisten. Außerdem fördert es die beim Bohren entstandenen Späne über die Sicke 11 aus dem Bohrloch heraus.

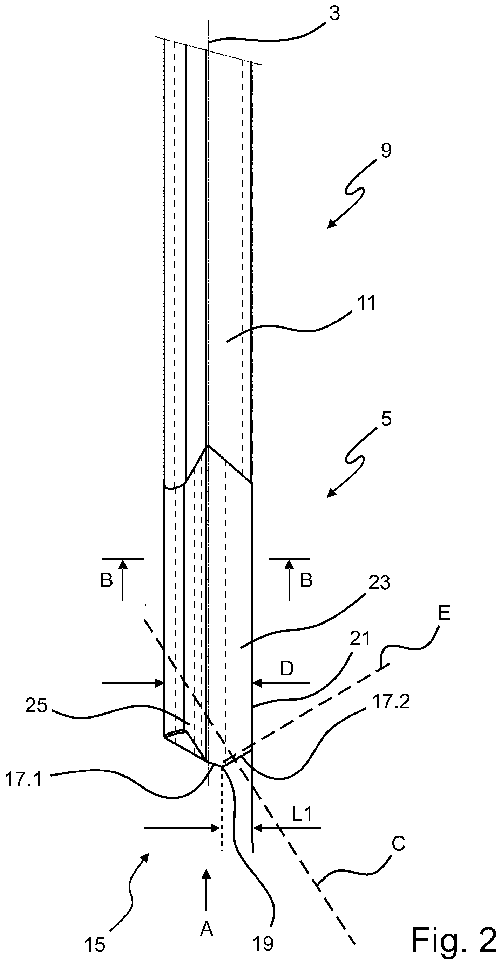

Das vordere Ende 15 ist in der Figur 2 etwas vergrößert dargestellt. Anhand dieser Figur werden Elemente des Bohrkopfs 5 näher erläutert.

Eine Schneide 17 besteht bei Einlippenbohrern 1 üblicherweise aus einer Innenschneide 17.1 und einer Außenschneide 17.2. Eine Schneidenspitze trägt das Bezugszeichen 19. Wie bei Einlippenbohrern üblich, ist die Schneidenspitze 19 radial beabstandet zu der Mittelachse 3 angeordnet. Die Innenschneide 17.1 erstreckt sich von der Mittelachse 3 bis zur Schneidenspitze 19. Die Außenschneide 17.2 erstreckt sich von der Schneidenspitze 19 ausgehend in radialer Richtung bis an den Außendurchmesser D des Bohrkopfs 5 und endet an einer Nebenschneide 21. Es sind auch Anschliffe bekannt, die an der Spitze abgeflacht sind.

In diesem Fall ergibt sich eine theoretische Schneidenspitze 19 durch Verlängerung der Innenschneide und der Außenschneide bis zu ihrem theoretischen Schnittpunkt, welcher als Bezugspunkt für die Längsnuten dient. Es sind darüber hinaus auch Anschliffe mit der Kontur eines Kreisbogens (Radiusanschliff) bekannt. Dann ist der vorderste Punkt des Bohrwerkzeugs die "Schneidenspitze".

Ein Abstand der Schneidenspitze 19 von der Nebenschneide 21 ist in der Figur 2 mit $L_1$ bezeichnet. Die Sicke 11 wird durch eine ebene Spanfläche 23 und eine ebene Wand 25 begrenzt. Die Spanfläche 23 und die Wand 25 schließen einen Winkel von etwa 130° ein. In dem dargestellten Ausführungsbeispiel verläuft die Spanfläche 23 durch die Mittelachse 3.

In der Figur 3 ist die Mittelachse 3 als "X" dargestellt. Gut zu erkennen ist auch die gerade Sicke 11. Sie wird durch eine Spanfläche 23 und eine Wand 25 begrenzt. Die Spanfläche 23 und die Wand 25 schließen einen Winkel von etwa 130° ein. In dem dargestellten Ausführungsbeispiel verläuft die Spanfläche 23 durch die Mittelachse 3. Das muss jedoch nicht zwingend so sein. Die Spanfläche 23 kann etwas unterhalb oder etwas oberhalb der die Mittelachse 3 verlaufen. In der Regel ist der Abstand der Spanfläche 23 zur Mittelachse 3 kleiner als 0,1 mm, bevorzugt kleiner als 0,05 mm. Durch die Mittelachse 3 verläuft ebenfalls eine durch eine strichpunktierte Linie angedeutete Spanflächenebene 27. Die Spanflächenebene 27 ist eine geometrische Definition, die nicht immer und ohne weiteres an dem Einlippenbohrer sichtbar ist. Die Spanflächenebene 27 ist dadurch definiert, dass sie parallel zur Spanfläche 23 und durch die Mittelachse 3 verläuft. Wenn die Spanfläche 23 durch die Mittelachse 3 verläuft, dann fallen Spanflächenebene 27 und Spanfläche 23 zusammen und man kann die Spanflächenebene 27 sehen.

In der Figur 3 ist die Innenschneide 17.1 als Linie zwischen der Mittelachse 3 und der Schneidenspitze 19 zu erkennen. Entsprechend ist die Außenschneide 17.2 als Linie zwischen der Schneidenspitze 19 und der Nebenschneide 21 zu erkennen. In der Ansicht von vorne fallen die Innenschneide 17.1 und die Außenschneide 17.2 mit der Spanfläche 23 zusammen. Aus Gründen der Übersichtlichkeit sind in der Figur 3 die Bezugszeichen 17.1 und 17.2 nicht eingetragen.

In der Figur 3 sind zwei Austrittsöffnungen des Kühlkanals 13 dargestellt.

An dem Bohrkopf 5 sind über den Umfang verteilt mehrere Führungsleisten 29 und 31 ausgebildet. Die Führungsleiste 29 und die Spanfläche 23 bilden dort, wo sie einander schneiden, die Nebenschneide 21. Diese Führungsleiste wird nachfolgend als Rundschlifffase 29 bezeichnet. Die Rundschlifffase 29 und die Führungsleisten 31 haben die Aufgabe, den Bohrkopf 5 in der Bohrung zu führen.

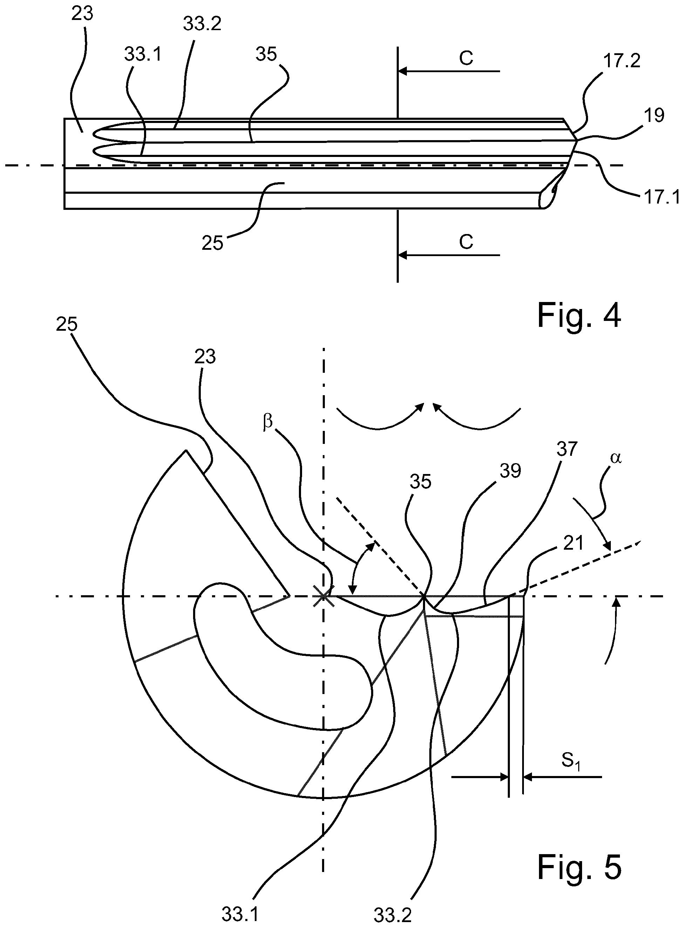

In den Figuren 4 bis 7 sind Ausführungsformen erfindungsgemäßer Tieflochbohrer in einer Ansicht von vorne bzw. als Teilschnitt entlang der Linie C-C (siehe Figur 4) dargestellt.

Erfindungsgemäß sind in der Spanfläche 23 zwei Längsnuten 33, nämlich eine innere Längsnut 33.1 und eine äußere Längsnut 33.2 vorhanden. Zwischen der inneren Längsnut 33.1 und der äußeren Längsnut 33.2 bildet sich ein Steg 35. Der höchste Punkt des Stegs 35 liegt in der Spanfläche 23 oder geringfügig darunter. In Zahlen: Der Steg 35 liegt maximal 0,1 mm, bevorzugt aber weniger als 0,05 mm unter der Spanfläche 23. Der Begriff "geringfügig darunter" ist so zu verstehen, dass beim Einschleifen der Längsnuten 33.1, 33.2 in die Spanfläche 23 im Bereich des Stegs 35 maximal 0,1 mm von der Spanfläche 23 abgetragen wird. Aus Figur 4 wird ersichtlich, dass die Längsnuten 33.1 und 33.2 in ausreichender Länge in die Spanfläche 23 des Bohrkopfes 5 eingebracht sind, so dass diese auch nach mehrfachem Nachschärfen durch Zurücksetzen der Schneide 17 erhalten bleiben.

Wie aus den Figuren 4 und 5 ersichtlich, ist zwischen der äußeren Längsnut 33.2 und der Nebenschneide 21 ein Abstand $S_1$ vorhanden. Das bedeutet, dass ein schmaler Streifen der Spanfläche 23 zwischen der äußeren Längsnut 33.2 und der Nebenschneide 21 stehen bleibt. In Folge dessen wird die Nebenschneide 21 durch die äußere Längsnut 33.2 nicht geschwächt. Der Streifen mit der Breite $S_1$ wirkt sich auch positiv auf die Belastbarkeit und die Standzeit der Schneidecke aus.

Anhand der Figur 5 wird die Wirkungsweise der Längsnuten bei der Spanbildung und Spanformung erläutert. Die Formgebung der Längsnuten 33.1 und 33.2 führt dazu, dass der Span, der von der äußeren Schneide 17.2 geschnitten wird, auf der Geraden 37 in Richtung des Stegs 35 zu fließen beginnt. Sobald er über die gekrümmte Linie 39 beziehungsweise die zugehörige gekrümmte Fläche in der äußeren Längsnut 33.2 in Richtung des Stegs 35 fließt, wird der Span umgebogen und eingerollt. Dieser Umformvorgang führt zu einem Brechen des von der äußeren Schneide 17.2 erzeugten Spans. In entsprechender Weise findet der gleiche Vorgang auch im Bereich der inneren Längsnut 33.1 statt.

Der Großteil des Schneidvorgangs erfolgt in dem radial äußeren Bereich der äußeren Schneide 17.2 (dort wo diese von der Geraden 37 und der Freifläche gebildet wird). Dort wird der Span geschnitten, er fließt über die durch die Gerade 37 in der Figur 5 repräsentierten ebenen Bereich der äußeren Längsnut 33.2 in Richtung des Stegs 35; d. h. radial nach innen. Die durch die gekrümmte Linie 39 repräsentierte gekrümmte Fläche der äußeren Längsnut 33.2 rollt den fließenden Span ein und führt zu dessen Abbrechen.

Die zwei gekrümmten Pfeile (ohne Bezugszeichen) in Figur 5 illustrieren diesen Sachverhalt. Die oben beschriebenen Vorgänge konnten bei realen Bohrungen durch Aufnahmen einer Hochgeschwindigkeitskamera verifiziert werden.

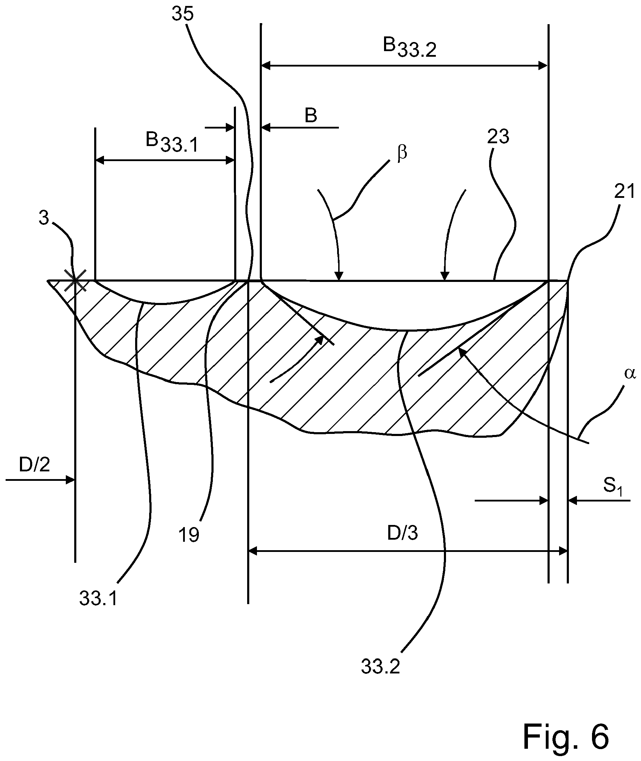

In der Figur 6 ist ein weiteres Ausführungsbeispiel eines erfindungsgemäßen Einlippenbohrers dargestellt. Figur 6 stellt einen Teilschnitt entlang der Linie C-C aus der Figur 4 dar. Bei diesem Ausführungsbeispiel ist die innere Längsnut 33.1 im Querschnitt als durchgehend gekrümmte Linie, zum Beispiel als Kreissegment ausgebildet. Entsprechendes gilt auch für die äußere Längsnut 33.2. Bei diesem Ausführungsbeispiel sind innere Längsnut 33.1 und die äußere Längsnut 33.2 geometrisch ähnlich. Das heißt im Querschnitt haben beide die Form einer gekrümmten Linie beziehungsweise eines Kreissegments. Allerdings ist eine Breite $B_{33.1}$ der inneren Längsnut 33.1 kleiner als eine Breite $B_{33.2}$ der äußeren Längsnut 33.2. Die Spitze 19 beziehungsweise der Steg 35 befindet sich bei diesem Ausführungsbeispiel um D/3 vom Außendurchmesser des Bohrwerkzeugs beziehungsweise der Nebenschneide 21 entfernt. Entsprechend ist der Steg 35 nur D/6 von der Mittelachse 3 beziehungsweise Drehachse des Bohrwerkzeugs entfernt. Es ist auch möglich, die Spitze 19 und den Steg 35 nach außen zu verschieben, so dass die Breite $B_{33.1}$ der inneren Längsnut 33.1 größer als die Breite $B_{33.2}$ der äußeren Längsnut 33.2 ist.

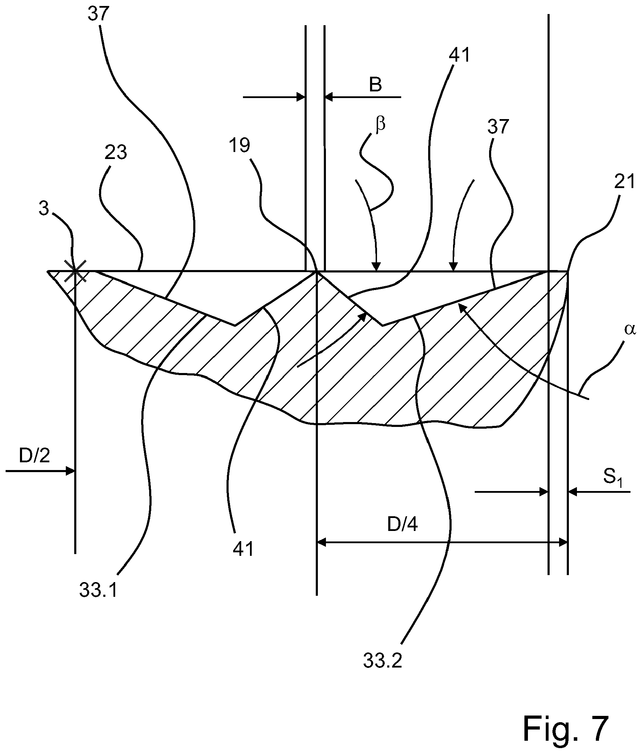

In der Figur 7 ist ein weiteres Ausführungsbeispiel von Längsnuten dargestellt. Bei diesem Ausführungsbeispiel haben die Längsnuten 33 im Querschnitt die Form eines ungleichschenkligen Dreiecks. Diese Dreiecke werden gebildet aus einer ersten Gerade 37 sowie einer zweiten Geraden 41. Zwischen der ersten Geraden 37 und der Spanfläche 23 ist der Winkel α angezeichnet. Die zweiten Geraden 41 schließen mit der Spanfläche 23 den Winkel β ein. Die Wertebereiche für die Winkel α und β sind in den Ansprüchen und in der Beschreibungseinleitung benannt.

Bei dieser Ausgestaltung der Längsnuten 33 ist das Abrichten der Schleifscheibe etwas einfacher. In der Praxis wird sich nach kurzer Zeit am Schnittpunkt der ersten Geraden 37 und der zweiten Geraden 41 ein kleiner Radius einstellen. Diese Verrundung ist dem Verschleiß der Schleifscheibe am tiefsten Punkt der Längsnuten 33 geschuldet.

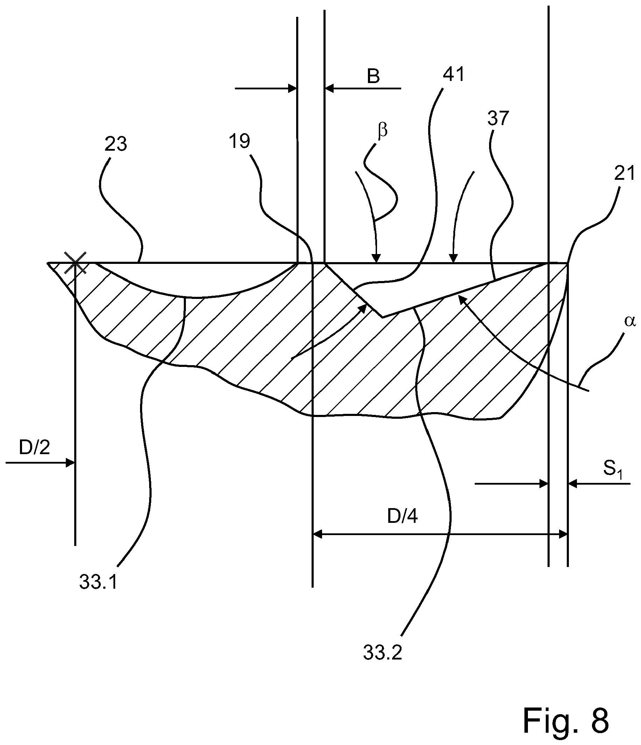

In der Figur 8 ist ein weiteres Ausführungsbeispiel von Längsnuten 33.1 und 33.2 dargestellt. Bei diesem Ausführungsbeispiel hat die innere Längsnut im Querschnitt die Form eines Kreissegments, während die äußere Längsnut 33.2 die Form eines ungleichschenkligen Dreiecks hat, das durch die Geraden 37 und 41 gebildet wird.

Es ist selbstverständlich auch möglich, dass die innere Längsnut 33.1 im Querschnitt einen dreieckigen Querschnitt hat, während die äußere Längsnut 33.2 als kreisbogenförmige Längsnut oder wie im Ausführungsbeispiel gemäß Figur 5 dargestellt, ausgebildet ist.

Gemeinsam ist allen Ausführungsformen, dass ein erheblicher Teil der Spanfläche als Längsnut ausgebildet wird, was sich darin wiederspiegelt, dass mehr als 40% (in manchen Ausführungen sogar 80% oder mehr) der Spanfläche durch das Einschleifen der Längsnuten 33 abgetragen wird. Es bleibt lediglich der Steg 35 stehen, dessen Breite B maximal 0,4 mm beträgt. Am äußeren Rand, das heißt dort wo sich die Nebenschneide 21 befindet, kann ein schmaler Streifen der Spanfläche 23 stehen bleiben, dessen Breite $S_1$ jedoch auch nur

wenige Zehntelmillimeter aufweist. Die Breite kann auch durchmesserabhängig sein und $0,1 \times D$ betragen.

Nachfolgend werden einige Begriffe stichwortartig erläutert und definiert.

Die Gesamtform aller schneidenden und nicht schneidenden Flächen stirnseitig am Bohrkopf wird als **Anschliff** bezeichnet. Dazu gehören auch Flächen, die nicht direkt an die Schneidkanten angrenzen, beispielsweise Flächen zur Lenkung des Kühlmittelstroms oder auch zusätzliche Freiflächen, um den Bohrer sauber schneiden zu lassen. Der Anschliff bestimmt zu einem großen Teil die Formung der Späne und wird auf den zu bearbeitenden Werkstoff abgestimmt. Ziele der Abstimmung sind dabei unter anderem die Formung möglichst günstiger Späne, eine hohe Bearbeitungsgeschwindigkeit, eine möglichst lange Lebensdauer des Bohrers und die Einhaltung der erforderlichen Qualitätsmerkmale der Bohrung wie z.B. Durchmesser, Oberfläche oder Geradheit (Mittenverlauf).

Zur Erhöhung der Lebensdauer kann der Bohrkopf mit einer **Beschichtung** als Verschleißschutz versehen sein; meist aus der Gruppe Metall-Nitride oder Metall-Oxyde; auch in mehreren abwechselnden Lagen. Die Dicke beträgt üblicherweise ca. 0,0005 bis 0,010 mm. Die Beschichtung erfolgt durch chemische oder physikalische Vakuumbeschichtungsverfahren. Die Beschichtung kann am Umfang des Bohrkopfes, an den Freiflächen oder an den Spanflächen vorgesehen sein, teilweise kann auch der gesamte Bohrkopf beschichtet werden.

**Einlippenbohrer** sind einschneidige Tieflochbohrer. Einlippenbohrer sind lang und schlank und weisen eine Mittelachse auf. Ihre Spanfläche ist eben; daher bezeichnet man sie auch als "gerade genutete" Werkzeuge. Sie werden verwendet zum Herstellen von Bohrungen mit einem großen Verhältnis von Länge zu Durchmesser. Sie werden vorwiegend in der industriellen Metallbearbeitung eingesetzt, wie bei der Produktion von Motorkomponenten, insbesondere bei der Produktion von Common-Rails oder Getriebewellen.

Einlippenbohrer werden üblicherweise in einem Durchmesserbereich von ca. 0,5 bis 50 mm eingesetzt. Es sind Bohrungen mit einer Länge von bis etwa 6.000 mm möglich.

Das Verhältnis von Länge zu Durchmesser (L/D) der Bohrung liegt üblicherweise in einem Bereich von ca. 10 bis über 100; es kann aber auch ca. 5 und bis etwa 250 betragen.

Einlippenbohrer zeichnen sich dadurch aus, dass eine Bohrung in hoher Qualität in einem Hub erzeugt werden kann. Sie können in Werkzeugmaschinen, wie z.B. Drehmaschinen, Bearbeitungszentren oder speziellen Tiefbohrmaschinen, eingesetzt werden.

Der Zerspanungsvorgang erfolgt durch eine Relativbewegung des Bohrers zum Werkstück in Drehrichtung um eine gemeinsame Mittelachse, sowie einer Relativbewegung des Bohrers auf das Werkstück zu in Richtung der gemeinsamen Mittelachse (Vorschubbewegung). Die Drehbewegung kann durch den Bohrer und/oder das Werkstück erfolgen. Das Gleiche gilt für die Vorschubbewegung.

Die **Freifläche** ist die Fläche an der Spitze des Bohrkopfs, welche der bearbeiteten Werkstückoberfläche gegenüberliegt.

Am Umfang des Bohrkopfes sind **Führungsleisten** angeordnet zur Abstützung der beim Schneiden entstehenden Schnittkräfte in der gebohrten Bohrung. Führungsleisten sind Zylindersegmente mit dem Durchmesser des Bohrkopfes; sie liegen während des Bohrvorgangs an der Bohrungswand an. In Umfangsrichtung zwischen den Führungsleisten sind am Bohrkopf radial zurückgesetzte Segmente mit kleinerem Durchmesser angeordnet, so dass ein Spalt zwischen Bohrungswand und Bohrkopf entsteht. Der Spalt dient der Ansammlung von Kühlmittel zur Kühlung und Schmierung der Führungsleisten.

Es gibt verschiedene Anordnungen von Führungsleisten, Ausführung abhängig vom zu bearbeitenden Werkstoff. Die erste Führungsleiste, die sich entgegen der Drehrichtung des Bohrers an die Spanfläche anschließt, wird als **Rundschlifffase** bezeichnet.

Durch den **Kühlkanal** wird Kühlmittel oder eine Mischung aus Kühlmittel und Luft (Minimalmengenschmierung) zum Schmieren und Kühlen des Bohrkopfs und der Führungsleisten sowie zum Abtransport der Späne zur Spitze des Bohrkopfs gefördert. Kühlmittel wird am hinteren Ende unter Druck zugeführt, passiert den Kühlkanal und tritt am Bohrkopf aus. Der Druck ist abhängig vom Durchmesser und von der Länge des Bohrers.

Durch einen angepassten Druck des Kühlmittels können Einlippenbohrer sehr kleine und sehr tiefe Bohrungen in einem Zug bohren.

Als **Mittenverlauf** wird beim Bohrvorgang die Abweichung [mm] der tatsächlichen Bohrungsmittelachse von der theoretischen Bohrungsmittelachse angesehen. Der Mittenverlauf ist ein Aspekt der Bohrungsqualität. Man ist bestrebt einen möglichst kleinen Mittenverlauf zu erreichen. Im Idealfall tritt überhaupt kein Mittenverlauf auf.

Durch **Nachschleifen** kann ein stumpf gewordener Einlippenbohrer wiederverwendet werden. Nachschleifen bedeutet ein meist stirnseitiges Nachsetzen/Abschleifen des verschlissenen Teils des Bohrkopfes, bis alle verschlissenen Bereiche (insbesondere von Spanfläche und Freifläche) abgetragen sind und wieder eine neue und scharfe Schneide entsteht. Danach weist der Anschliff wieder seine ursprüngliche Gestalt auf.

Als **Nebenschneide** wird die Berührungslinie (Kante) zwischen Spanfläche und Rundschlifffase bezeichnet. Der Schnittpunkt zwischen Außenschneide und Nebenschneide wird als **Schneidecke** bezeichnet.

Der Bohrkopf hat eine **Schneide,** diese kann in mehrere Schneidenabschnitte und in mehrere Stufen unterteilt sein. Die Schneide ist der Bereich, der an der Zerspanung beteiligt ist. Die Schneidkante oder Schneide ist die Schnittlinie von Spanfläche und Freifläche. Die Schneide ist meistens in mehrere gerade Teil-Schneiden aufgeteilt.

Die **Spanfläche** ist der Bereich, auf dem der Span abläuft; sie kann auch aus mehreren Teil-Flächen bestehen.

Ein **Spanformer** ist eine in die Spanfläche eingearbeitete parallel zur Schneide verlaufende und unmittelbar an die Schneide anschließende Vertiefung. Anders ausgedrückt: Die Zwischen Schneidkante und Spanformer ist keine Spanfläche vorhanden.

Ein **Spanteiler** stellt eine "Unterbrechung" der äußeren Schneide dar, welche die Breite der Späne reduziert.

**Patentansprüche**

1. Einlippenbohrer umfassend einen Bohrkopf (5), wobei der Bohrkopf (5) eine Drehachse (3), einen Bohrdurchmesser (D) sowie eine Schneide (17) aufweist, wobei der Schneide (17) eine Spanfläche (23) zugeordnet ist, wobei in der Spanfläche (23) zwei parallel zueinander verlaufende Längsnuten (33.1, 33.2), nämlich eine innere (33.1) und eine äußere (33.2) Längsnut, vorhanden sind und zwischen der inneren Längsnut (33.1) und der äußeren Längsnut (33.2) ein Steg (35) vorhanden ist, **dadurch gekennzeichnet, dass** der Steg (35) in die Schneidenspitze (19) mündet.

2. Einlippenbohrer nach Anspruch 1, **dadurch gekennzeichnet, dass** die Längsnuten (33.1, 33.2) im Querschnitt symmetrisch oder geometrisch ähnlich zu dem Steg (35) angeordnet sind.

3. Einlippenbohrer nach einem der vorhergehenden Ansprüche, **dadurch gekennzeichnet, dass** die Längsnuten (33.1, 33.2) in einer orthogonal zur Drehachse (3) des Einlippenbohrers verlaufenden Schnittebene die Form einer ersten Geraden (37) und einer tangential daran anschließenden gekrümmten Linie (39) haben, dass die erste Gerade (37) und die Spanfläche (23) einen Winkel ($\alpha$) einschließen, und dass die gekrümmte Linie (39) die Spanfläche (23) unter einem Winkel ($\beta$) schneidet.

4. Einlippenbohrer nach einem der vorhergehenden Ansprüche, **dadurch gekennzeichnet, dass** die Längsnuten (33.1, 33.2) in einer orthogonal zur Drehachse (3) des Einlippenbohrers verlaufenden Schnittebene die Form einer ersten Geraden (37) und einer daran anschließenden zweiten Geraden (41) haben, dass die erste Gerade (37) und die Spanfläche (23) einen Winkel ($\alpha$) einschließen, und dass die zweite Gerade (41) und die Spanfläche (23) einen Winkel ($\beta$) einschließen.

5. Einlippenbohrer nach Anspruch 3 oder 4, **dadurch**

**gekennzeichnet, dass** der Winkel (α) kleiner oder gleich 30° ist, und/oder dass der Winkel (α) größer oder gleich 10° ist.

6. Einlippenbohrer nach Anspruch 3 oder 4, **dadurch gekennzeichnet, dass** der Winkel (α) kleiner oder gleich 25° ist, und/oder dass der Winkel (α) größer oder gleich 15° ist.

7. Einlippenbohrer nach Anspruch 3 oder 4, **dadurch gekennzeichnet, dass** der Winkel (α) gleich 20° ist.

8. Einlippenbohrer nach einem der Ansprüche 3 bis 7, **dadurch gekennzeichnet**, und dass der Winkel (β) kleiner oder gleich 60° ist, und/oder dass der Winkel (β) größer oder gleich 20° ist.

9. Einlippenbohrer nach einem der Ansprüche 3 bis 7, **dadurch gekennzeichnet, dass** der Winkel (β) kleiner oder gleich 50° ist, und/oder dass der Winkel (β) größer oder gleich 35° ist.

10. Einlippenbohrer nach einem der Ansprüche 3 bis 7, **dadurch gekennzeichnet, dass** der Winkel (β) gleich 45° ist.

11. Einlippenbohrer nach einem der vorhergehenden Ansprüche, **dadurch gekennzeichnet, dass** die Längsnuten (33.1, 33.2) in einer orthogonal zur Drehachse (3) des Einlippenbohrers verlaufenden Schnittebene die Form eines Kreissegments, eines gleichschenkligen Dreiecks oder eines ungleichschenkligen Dreiecks haben.

12. Einlippenbohrer nach einem der vorhergehenden Ansprüche, **dadurch gekennzeichnet, dass** ein Abstand ($L_1$) der Schneidenspitze (19) und des Stegs (35) von der Nebenschneide (21) größer als 0,2 mal der Bohrdurchmesser (D) ist. ($L_1 > 0,2 \times D$)

13. Einlippenbohrer nach einem der vorhergehenden Ansprüche, **dadurch gekennzeichnet, dass** ein Abstand ($L_1$) der Schneidenspitze (19) und des Stegs (35) von der Nebenschneide (21) kleiner als 0,36 mal der Bohrdurchmesser (D) ist. ($L_1 < 0,36 \times D$)

14. Einlippenbohrer nach einem der vorhergehenden Ansprüche, **dadurch gekennzeichnet, dass** ein Abstand ($L_1$) der Schneidenspitze (19) und des Stegs (35) von der Nebenschneide (21) gleich 0,25 mal der Bohrdurchmesser (D) ist. ($L_1 = 0,25 \times D$)

15. Einlippenbohrer nach einem der vorhergehenden Ansprüche, **dadurch gekennzeichnet, dass** ein Abstand ($S_1$) zwischen einem Rand der äußeren Längsnut (33.2) und der Nebenschneide (21) mindesten 0,05 mm, bevorzugt 0,10 mm, und besonders bevorzugt 0,15 mm, oder 0,1 mal der Bohrdurchmesser ($S_1 = 0,1 \times D$) beträgt.

16. Einlippenbohrer nach einem der vorhergehenden Ansprüche, **dadurch gekennzeichnet, dass** der Steg (35) an seinem höchsten Punkt eine Breite (B) aufweist, und dass die Breite (B) maximal 0,4 mm beträgt.

17. Einlippenbohrer nach einem der vorhergehenden Ansprüche, **dadurch gekennzeichnet, dass** die Summe einer Breite ($B_{33.1}$) der inneren Längsnut (33.1) und einer Breite ($B_{33.2}$) der äußeren Längsnut (33.2) größer ist als 0,4 × der Bohrdurchmesser (D) des Einlippenbohrers

$$(B_{33.1} + B_{33.2} > 0,4 \times D)$$

18. Einlippenbohrer nach einem der vorhergehenden Ansprüche, **dadurch gekennzeichnet, dass** der Bohrkopf (5) ganz oder teilweise mit einer Hartstoffbeschichtung versehen ist.

**Claims**

1. Single-lip drill, comprising a drill head (5), wherein the drill head (5) has a rotational axis (3), a drilling diameter (D) as well as a cutting edge (17), wherein a cutting face (23) is assigned to the cutting edge (17), wherein two longitudinal grooves (33.1, 33.2) extending parallel to one another, namely an inner (33.1) and an outer (33.2) longitudinal groove, are present in the cutting face (23) and a land (35) is present between the inner longitudinal groove (33.1) and the outer longitudinal groove (33.2), **characterized in that** the land (35) ends in the tip (19) of the cutting edge.

2. Single-lip drill as claimed in claim 1, **characterized in that** the longitudinal grooves (33.1, 33.2) are arranged in cross-section symmetrically or geometrically similar to the land (35).

3. Single-lip drill as claimed in one of the preceding claims, **characterized in that** the longitudinal grooves (33.1, 33.2), in a sectional plane extending orthogonal to the rotational axis (3) of the single-lip drill, have the form of a first straight line (37) and a curved line (39) tangentially connected to it, that the first straight line (37) and the cutting face (23) enclose an angle (α) and that the curved line (39) crosses the cutting face (23) under an angle (β).

4. Single-lip drill as claimed in one of the preceding claims, **characterized in that** the longitudinal grooves (33.1, 33.2), in a sectional plane extending orthogonal to the rotational axis (3) of the single-lip drill, have the form of a first straight line (37) and a second straight line (41) connected to it, that the first straight line (37) and the cutting face (23) enclose an angle ($\alpha$) and that the second straight line (41) and the cutting face (23) enclose an angle ($\beta$).

5. Single-lip drill as claimed in claim 3 or 4, **characterized in that** the angle ($\alpha$) is smaller or equal to 30° and/or that the angle ($\alpha$) is greater or equal to 10°.

6. Single-lip drill as claimed in claim 3 or 4, **characterized in that** the angle ($\alpha$) is smaller or equal to 25° and/or that the angle ($\alpha$) is greater or equal to 15°.

7. Single-lip drill as claimed in claim 3 or 4, **characterized in that** the angle ($\alpha$) is equal to 20°.

8. Single-lip drill as claimed in one of claims 3 to 7, **characterized in that** the angle ($\beta$) is smaller or equal to 60° and/or that the angle ($\beta$) is greater or equal to 20°.

9. Single-lip drill as claimed in one of claims 3 to 7, **characterized in that** the angle ($\beta$) is smaller or equal to 50° and/or that the angle ($\beta$) is greater or equal to 35°.

10. Single-lip drill as claimed in one of claims 3 to 7, **characterized in that** the angle ($\beta$) is smaller or equal to 45°.

11. Single-lip drill as claimed in one of the preceding claims, **characterized in that** the longitudinal grooves (33.1, 33.2), in a sectional plane extending orthogonal to the rotational axis (3) of the single-lip drill, have the form of a segment of a circle, an isosceles triangle or a non-isosceles triangle.

12. Single-lip drill as claimed in one of the preceding claims, **characterized in that** a distance ($L_1$) of the tip (19) of the cutting edge and of the land (35) from the minor cutting edge (21) is greater than 0.2 times the drill diameter (D). ($L_1 > 0.2 \times D$)

13. Single-lip drill as claimed in one of the preceding claims, **characterized in that** a distance ($L_1$) of the tip (19) of the cutting edge and of the land (35) from the minor cutting edge (21) is smaller than 0.36 times the drill diameter (D). ($L_1 < 0.36 \times D$)

14. Single-lip drill as claimed in one of the preceding claims, **characterized in that** a distance ($L_1$) of the tip (19) of the cutting edge and of the land (35) from the minor cutting edge (21) is equal to 0.25 times the drill diameter (D). ($L_1 = 0,25 \times D$)

15. Single-lip drill as claimed in one of the preceding claims, **characterized in that** a distance ($S_1$) between an edge of the outer longitudinal groove (33.2) and the minor cutting edge (21) is at least 0.05 mm, preferably 0.10 mm and particularly preferred 0.15 mm or 0.1 times the drill diameter

$$(S_1 = 0.1 \times D).$$

16. Single-lip drill as claimed in one of the preceding claims, **characterized in that** the land (35) at its highest point has a width (B) and that the width (B) is 0.4 mm at the most.

17. Single-lip drill as claimed in one of the preceding claims, **characterized in that** the sum of a width ($B_{33.1}$) of the inner longitudinal groove (33.1) and a width ($B_{33.2}$) of the outer longitudinal groove (33.2) is greater than 0.4 × the drill diameter (D) of the single-lip drill. ($B_{33.1} + B_{33.2} > 0.4 \times D$)

18. Single-lip drill as claimed in one of the preceding claims, **characterized in that** the drill head (5) is provided entirely or partially with a cover of hard material.

## Revendications

1. Foret à lèvre unique comprenant une tête de foret (5), la tête de foret (5) présentant un axe de rotation (3), un diamètre de foret (D) et une arête de coupe (17), une face de coupe (23) étant associée à l'arête de coupe (17), deux rainures longitudinales (33.1, 33.2) s'étendant parallèlement l'une à l'autre, à savoir une rainure longitudinale intérieure (33.1) et une rainure longitudinale extérieure (33.2), étant présentes dans la face de coupe (23), et une nervure (35) étant présente entre la rainure longitudinale intérieure (33.1) et la rainure longitudinale extérieure (33.2), **caractérisé en ce que** la nervure (35) débouche dans la pointe d'arête de coupe (19).

2. Foret à lèvre unique selon la revendication 1, **caractérisé en ce que** les rainures longitudinales (33.1, 33.2) sont disposées symétriquement ou géométriquement de manière similaire à la nervure (35) en coupe transversale.

3. Foret à lèvre unique selon l'une quelconque des revendications précédentes, **caractérisé en ce que** les rainures longitudinales (33.1, 33.2) ont la forme d'une première droite (37) et d'une courbe tangentielle (39) dans un plan de coupe s'étendant perpendiculairement à l'axe de rotation (3) du foret à lèvre unique, **en ce que** la première droite (37) et la face de coupe (23) forment un angle ($\alpha$) et **en ce que** la courbe (39) recoupe la face de coupe (23) selon un

angle ($\beta$).

4. Foret à lèvre unique selon l'une des revendications précédentes, **caractérisé en ce que** les rainures longitudinales (33.1, 33.2) ont la forme d'une première droite (37) et d'une seconde droite adjacente (41) dans un plan de coupe s'étendant orthogonalement à l'axe de rotation (3) du foret à lèvre unique, **en ce que** la première droite (37) et la face de coupe (23) forment un angle ($\alpha$), et **en ce que** la seconde droite (41) et la face de coupe (23) forment un angle ($\beta$).

5. Foret à lèvre unique selon l'invention, **caractérisé en ce que** l'angle ($\alpha$) est inférieur ou égal à 30° et/ou **en ce que** l'angle ($\alpha$) est supérieur ou égal à 10°.

6. Foret à lèvre unique selon la revendication 3 ou 4, **caractérisé en ce que** l'angle ($\alpha$) est inférieur ou égal à 25° et/que l'angle ($\alpha$) est supérieur ou égal à 15°.

7. Foret à lèvre unique selon la revendication 3 ou 4, **caractérisé en ce que** l'angle ($\alpha$) est égal à 20°.

8. Foret à lèvre unique selon l'une quelconque des revendications 3 à 7, **caractérisé en ce que** l'angle ($\beta$) est inférieur ou égal à 60°, et/ou **en ce que** l'angle ($\beta$) est supérieur ou égal à 20°.

9. Foret à lèvre unique selon l'une des revendications 3 à 7, **caractérisé en ce que** l'angle ($\beta$) est inférieur ou égal à 50°, et/ou **en ce que** l'angle ($\beta$) est supérieur ou égal à 35°.

10. Foret à lèvre unique selon l'une des revendications 3 à 7, **caractérisé en ce que** l'angle ($\beta$) est égal à 45°.

11. Foret à lèvre unique selon l'une quelconque des revendications précédentes, **caractérisé en ce que** les rainures longitudinales (33.1, 33.2) présentent, dans un plan de coupe s'étendant perpendiculairement à l'axe de rotation (3) du foret à lèvre unique, la forme d'un segment circulaire, d'un triangle isocèle ou d'un triangle non isocèle.

12. Foret à lèvre unique selon l'une quelconque des revendications précédentes, **caractérisé en ce qu'**une distance ($L_1$) de la pointe d'arête de coupe (19) et de la nervure (35) par rapport à l'arête de coupe secondaire (21) est supérieure à 0,2 fois le diamètre de foret (D). ($L_1 > 0,2 \times D$)

13. Foret à lèvre unique selon l'une quelconque des revendications précédentes, **caractérisé en ce qu'**une distance ($L_1$) de la pointe d'arête de coupe (19) et de la nervure (35) par rapport à l'arête de coupe secondaire (21) est inférieure à 0,36 fois le diamètre de foret (D). ($L_1 < 0,36 \times D$)

14. Foret à lèvre unique selon l'une quelconque des revendications précédentes, **caractérisé en ce qu'**une distance ($L_1$) de la pointe d'arête de coupe (19) et de la nervure (35) par rapport à l'arête de coupe secondaire (21) est égale à 0,25 fois le diamètre de foret (D). ($L_1 = 0,25 \times D$)

15. Foret à lèvre unique selon l'une quelconque des revendications précédentes, **caractérisé en ce qu'**une distance ($S_1$) entre un bord de la rainure longitudinale extérieure (33.2) et l'arête de coupe secondaire (21) est d'au moins 0,05 mm, de préférence de 0,10 mm, et de manière particulièrement préférée de 0,15 mm, ou de 0,1 fois le diamètre de foret ($S_1 = 0,1 \times D$).

16. Foret à lèvre unique selon l'une quelconque des revendications précédentes, **caractérisé en ce que** la nervure (35) présente, à son point le plus élevé, une largeur (B), et **en ce que** la largeur (B) est au maximum de 0,4 mm.

17. Foret à lèvre unique selon l'une des revendications précédentes, **caractérisé en ce que** la somme d'une largeur ($B_{33.1}$) de la rainure longitudinale intérieure (33.1) et d'une largeur ($B_{33.2}$) de la rainure longitudinale extérieure (33.2) est supérieure à 0,4 fois le diamètre de foret (D) du foret à lèvre unique. ($B_{33.1} + B_{33.2} > 0,4 \times D$)

18. Foret à lèvre unique selon l'une quelconque des revendications précédentes, **caractérisé en ce que** la tête de foret (5) est entièrement ou partiellement munie d'un revêtement en matériau dur.

Fig. 1

Fig. 2

Ansicht A

Fig. 3

Fig. 4

Fig. 5

Fig. 6

Fig. 7

23  19  B  41  37  21

β

α

D/2

D/4  S₁

33.1

33.2

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010051248 A1
- JP S6234712 B
- JP 2009101460 A
- WO 2018219926 A1